# EUROPEAN PATENT SPECIFICATION

(11) **EP 0 498 526 B1**
(45) Date of publication and mention of the grant of the patent: **13.11.1996**
(21) Application number: 92300087.1
(22) Date of filing: 06.01.1992
(51) Int. Cl.: H04N 5/45

(54) **Image displaying apparatus**
Bildwiedergabegerät
Appareil pour la reproduction d'images

(30) Priority: 08.02.1991 JP 18069/91
(43) Date of publication of application: 12.08.1992
(73) Proprietor: SONY CORPORATION, Tokyo (JP)
(72) Inventor: Sano, Shigeyuki, Shinagawa-ku Tokyo (JP); Tsuchida, Susumu, Shinagawa-ku Tokyo (JP); Yoshida, Chisato, Shinagawa-ku Tokyo (JP); Nohara, Satoshi, Shinagawa-ku Tokyo (JP); Chikuma, Takashi, Shinagawa-ku Tokyo (JP)
(74) Representative: Ayers, Martyn Lewis Stanley

(56) References cited:
- EP-A- 0 148 733
- IEEE TRANSACTIONS ON CONSUMER ELECTRONICS, vol. 37, no. 3, August 1991, New York SUSUMU TSUCHIDA et al. "Multipicture for high resolution wide aspekt ratio screen" pages 313-318

## Description

The present invention generally relates to an image displaying apparatus and, more particularly, to an image displaying apparatus for receiving and reproducing, for example, a so-called HDTV (i.e., high definition television) signal.

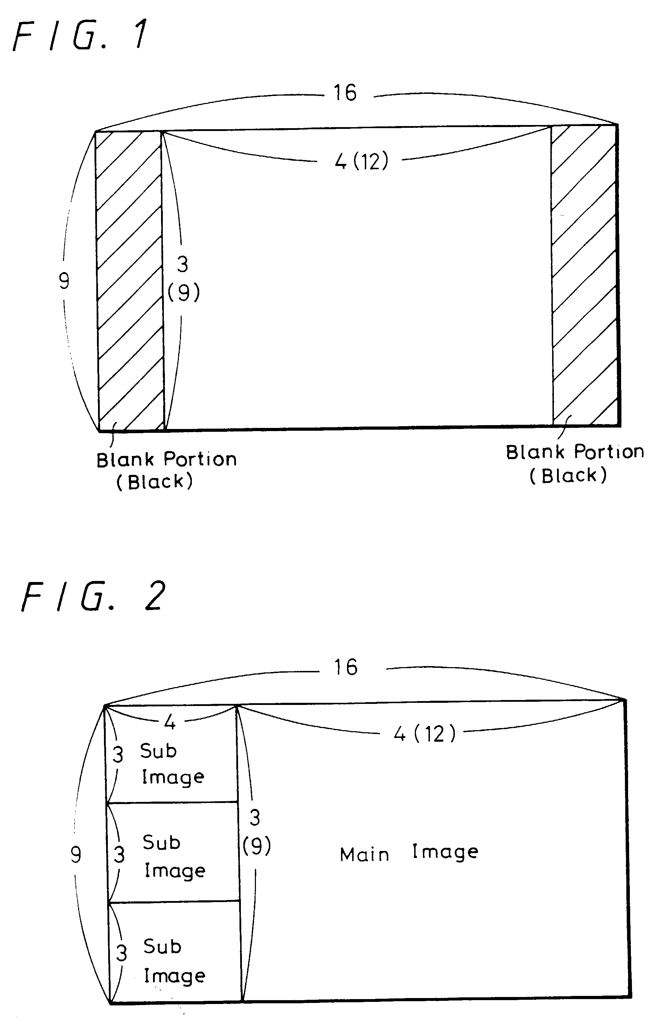

In an image displaying apparatus for receiving and reproducing an HDTV signal, e.g., high-vision signal, a display screen is designed to have a width-to-height aspect ratio of 16:9 and it is proposed that such image displaying apparatus should be able to display an image of a width-to-height aspect ratio of 4:3. However, when an image having a width-to-height aspect ratio of 4:3 is displayed on the centre of the display screen of a width-to-height ratio of 16:9, blank portions (portions where no image is displayed) are produced on both sides of the display screen as shown in figure 1 of the accompanying drawings. Usually, the blank portions are displayed in dark colour.

It is known for normal televisions, for instance from document EP-A-0,148,733, to reduce the area of screen taken up by the picture to allow advertisements to appear in the rest of the screen. The picture at all times maintains its aspect ratio of 4:3, so that the advertisements appear both beneath and beside it. Its uses are clearly limited.

On the other hand, it is proposed that an image of width-to-height aspect ratio of 4:3 (= 12:9) is displayed on one side of a display screen having a width-to-height aspect ration of 16:9 as shown in Figure 2. In that case, the blank portion produced on the other side of the display screen has a width-to-height aspect ratio of 4:9 and if this blank portion is divided equally by three in the vertical direction, then three areas each having a width-to-height aspect ratio of 4:3 are produced on the other side of the blank portion. That is, by means of the above-mentioned display, a main image of width-to-height aspect ratio of 4:3 can be displayed on the display screen of width-to-height aspect ratio of 16:9 and three sub images of the same width-to-height aspect ratio of 4:3 can be simultaneously displayed thereon at maximum.

When the main image and the sub images are displayed as described above, according to the conventional image display apparatus having a display screen of width-to-height aspect ration of 16:9, left and right positions in which the main images and the sub images are displayed are fixed, for example, the main image is displayed on the right-hand side and the sub images are displayed on the left-hand side of the display screen. However, depending on conditions such as where the image displaying apparatus is installed, if the displayed position of the main and sub images are fixed as described above, the viewer may not be able to enjoy the main and sub images satisfactorily.

Accordingly, it is an object of the present invention to provide an improved image display apparatus in which the aforesaid shortcomings and disadvantages encountered with the prior art can be reduced or eliminated.

According to the present invention, there is provided an image displaying apparatus comprising:
a) a screen capable of displaying an image with a width-to-height aspect ratio of 16:9;
b) first storage means for storing a main image signal with a width-to-height aspect ratio of 4:3;
c) second storage means for storing sub image signals with a width-to-height aspect ratio of 4:3;
d) means for displaying on said screen main and sub images of said main and sub image signals read out from said first and second storage means;
e) input means for inputting a chosen arrangement of said main and sub images on said screen; and
f) control means, responsive to a signal from said input means, for controlling a timing at which said main and sub image signals are read out from said first and second storage means so that said sub image is displayed on a portion of the left or right side of said main image displayed on said screen as chosen.

Other, optional features of the invention are defined in the sub-claims.

The invention will be further described by way of non-limitative example with reference to the accompanying drawings, in which:-
Figure 1 is a schematic diagram used to explain the case such that an image of width-to-height aspect ratio of 4:3 is displayed on the centre of a display screen of width-to-height aspect ratio of 16:9;
Figure 2 is a schematic diagram used to explain the case such that a main image of width-to-height aspect ratio of 4:3 is displayed together with three sub images of width-to-height aspect ratio of 4:3 on the display screen of width-to-height aspect ratio of 16:9;
Figure 3 is a block diagram showing an embodiment of an image displaying apparatus according to the present invention;
Figure 4 is a schematic diagram used to explain the image displaying apparatus according to the present invention; and
Figure 5 is a flowchart to which references will be made in explaining operation of the image displaying apparatus according to the present invention.

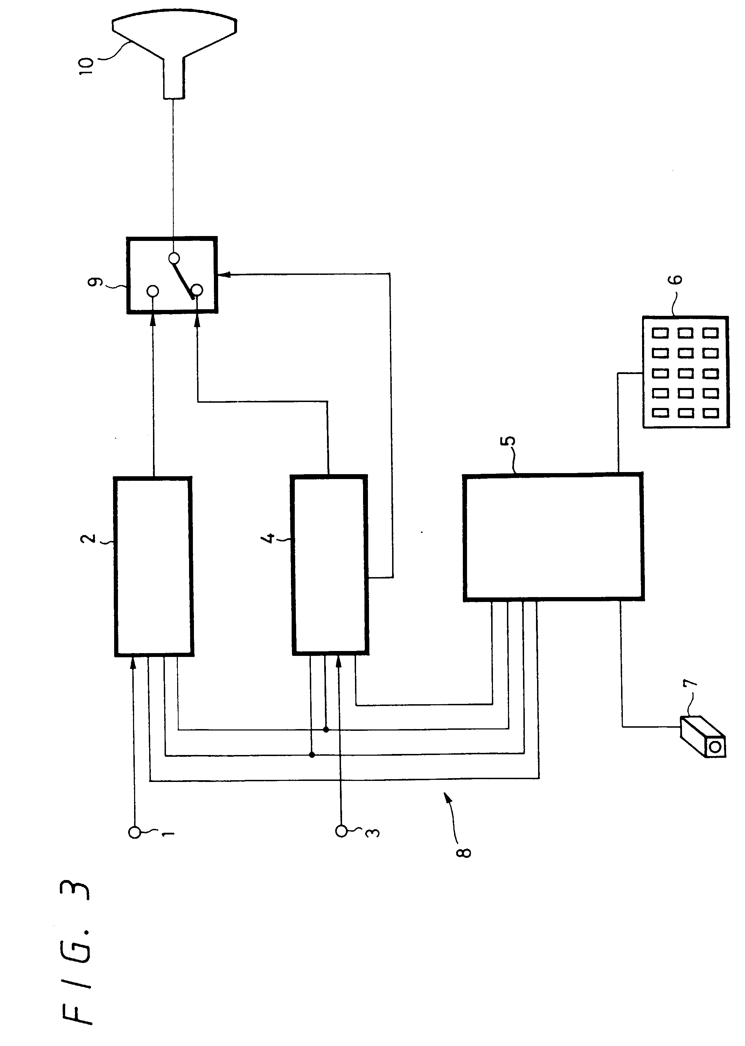

Referring to Figure 3, a video signal of width-to-height aspect ratio of 4:3 to be displayed on a large or main picture screen is supplied to an input terminal 1. This video signal applied to the input terminal 1 will hereinafter be referred to as the main video signal and it is supplied to and written in a time compression IC (integrated circuit) 2. A video signal of width-to-height aspect ratio of 4:3 to be displayed on a small picture screen is supplied to an input terminal 3. This video signal will hereinafter be referred to as the sub video signal. The sub video signal applied to the input terminal 3 is supplied to and written in a sub image IC 4 where it is stored.

A microcomputer 5, such as a system control microcomputer, generates desired control signals in response to signals supplied thereto from a keyboard 6 or a remote commander sensing unit 7. Control signals from the system control microcomputer 5 are supplied through a three-wire bus (clock bus, data bus and chip-select bus) 8 to the time compression IC 2 and the sub image IC 4 so that video signals are read out from the ICs 2 and 4 by the control signals from the system microcomputer 5. The video signals read out from the ICs 2 and 4 are supplied through a commutating change-over switch 9 to a cathode ray tube (CRT) 10 whose display screen has a width-to-height aspect ratio of 16:9. Also, a control signal from the sub image IC 4 is supplied to the change-over switch 9 so that the change-over switch 9 selects the video signals read out from the ICs 2 and 4 in response to the control signal supplied thereto.

In this image displaying apparatus, the video signals are read out from the ICs 2 and 4 in accordance with clock pulses supplied thereto from the system control microcomputer 5 through the 3-wire bus 8, and data indicative of read-out start position of respective horizontal periods are supplied through the 3-wire bus 8 to the ICs 2 and 4, whereby data, at the positions indicated by the read-out start position data, of the main video signal and the sub video signal are read out from the ICs 2 and 4. Further, the change-over switch 9 is controlled by the control signal from the sub image IC 4, whereby the main and sub video signals are mixed and displayed on the picture screen having the width-to-height aspect ratio of 16:9 of the CRT 10.

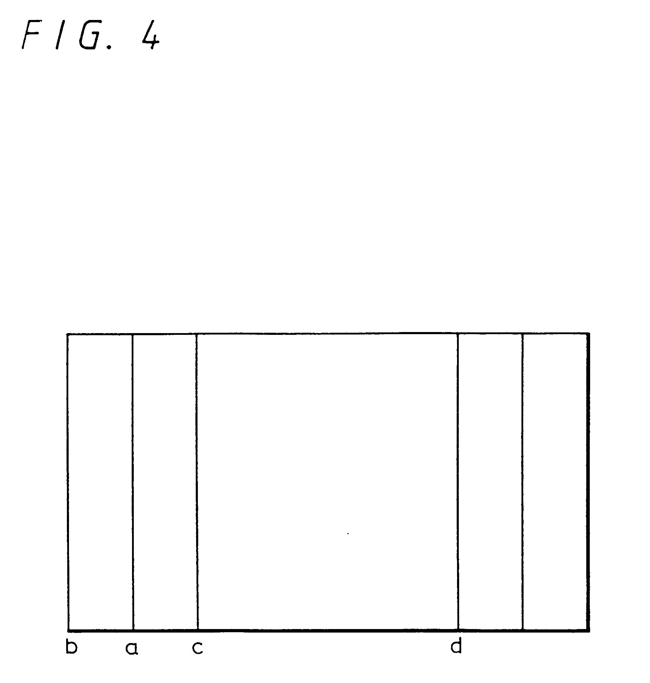

Accordingly, a read-out start position shown by reference symbol a in figure 4 is supplied to the time compression IC 2, whereby the video signal of width-to-height aspect ratio of 4:3 is displayed on the centre of the display screen having the width-to-height aspect ratio of 16:9. Also, a read-out start position shown by reference symbol b in figure 4 is supplied to the sub image IC 4 and a read-out start position shown by reference symbol c shown in figure 4 is supplied to the time compression IC 2, whereby a main image is displayed in the right-hand side of the display screen and a sub image is displayed in the left-hand side of the display screen of the CRT 10.

Alternatively, in the image displaying apparatus of the present invention, the read-out start position shown by reference symbol b in figure 4 is supplied to the time compression IC 2 and the read-out start position shown by reference symbol d in figure 4 is supplied to the sub image IC 4, whereby the sub image can be displayed on the right-hand side of the display screen and the main image can be displayed on the left-hand side of the display screen of the CRT 10.

Accordingly, in this image displaying apparatus, a control switch is provided, for example, on the keyboard 6 or a remote controller (not shown), e.g. a hand-held remote controller, in order to place this image displaying apparatus in such a mode as to display the aforesaid video signals in a particular mode so that, when this control switch is depressed once, then the main image is displayed on the right-hand side of the display screen and the sub image is displayed on the left hand-side thereof. This mode will hereinafter be referred to as the P-out-P mode for simplicity. Also, when the control switch is depressed one more time, then the sub image is displayed on the right-hand side and the main image is displayed on the left-hand side of the display screen.

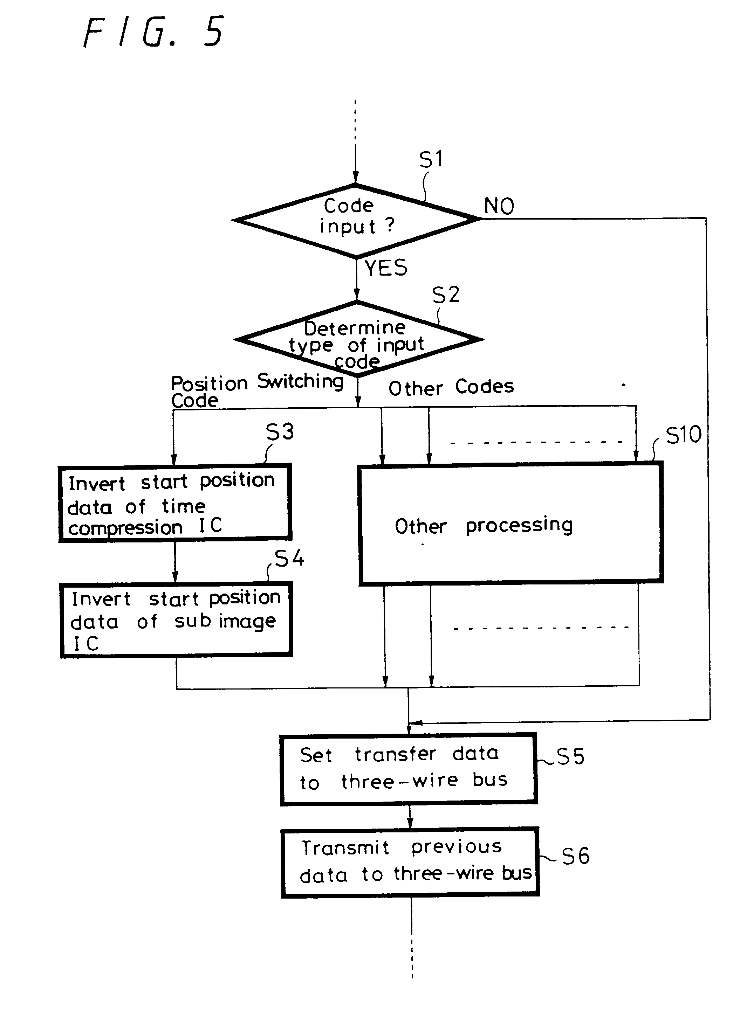

Figure 5 shows a flowchart of one portion of the main routine stored in the system control microcomputer 5.

Referring to figure 5, it is determined at decision step S1 whether a code is input by the remote commander (not shown) or by the keyboard 6. If a code is input as represented by a YES at decision step S1, then the processing proceeds to the next step S2. In step S2, the type of the input code is determined. If the code is the position switching code of the P-out-P mode, then the processing proceeds to step S3, whereat start position data of the time compression IC 2 is inverted (b <==> c) and the processing proceeds to the next step S4. In step S4, start position data of the sub image IC 4 is inverted (d <==> b). Further, in step S5, transfer data is set to the three-wire bus 8 and the data is transmitted to the three-wire bus 8 in step S6. If no code is input as represented by a NO at decision step S1, then the processing directly proceeds to step S5, whereat previous data is set and the previous data is repeatedly transmitted at step S6. If the input code is other codes than the P-out-P position switching code in step S2, then the processing proceeds to step S10, whereat other corresponding processings are executed.

As described above, since the displayed position of the main image (from the input terminal 1 and the time compression IC 2) and the sub image (from the input terminal 3 and the sub image IC 4) can be selectively switched (by the system control microcomputer 5) and they can be displayed on the CRT 10 in an arbitrary fashion by operating the keyboard 6 or the remote sensing unit 7, the displayed state can be selectively switched in response to the conditions such as the disposed position of this image displaying apparatus or the like, thus making it possible for the viewer to view the images satisfactorily.

The aforesaid image displaying apparatus can be effected with great ease by rewriting the program software of the conventional system control microcomputer 5. Furthermore, three sub images need,not always be displayed simultaneously and instead only one sub image may be displayed on an arbitrary section of the display screen.

Since the main image and the sub image can be displayed on the display screen such that their displayed positions are selectively switched to the right and left positions, by switching the displayed states of the main image and the sub image in response to the condition such as the disposed position of the image displaying apparatus or the like, it is possible for the viewer to view the main image and sub images satisfactorily.

Although the preferred embodiment of the invention has been described herein with reference to the accompanying drawings, it is to be understood that the invention is not limited to that precise embodiment and that various changes and modifications thereof could be effected by one skilled in the art without departing from the scope of the invention as defined in the appended claims.

## Claims

1. An image displaying apparatus comprising:
a) a screen (10) capable of displaying an image with a width-to-height aspect ratio of 16:9;
b) first storage (2) means for storing a main image signal with a width-to-height aspect ratio of 4:3;
c) second storage means (4) for storing sub image signals with a width-to-height aspect ratio of 4:3;
d) means for displaying on said screen main and sub images of said main and sub image signals read out from said first and second storage means (2,4);
e) input means (6,2) for inputting a chosen arrangement of said main and sub images on said screen; and
f) control means (5), responsive to a signal from said input means (6,7), for controlling a timing at which said main and sub image signals are read out from said first and second storage means (2,4) so that said sub image is displayed on a portion of the left or right side of said main image displayed on said screen (10) as chosen.

2. The image displaying apparatus according to claim 1, wherein said displaying means is capable of displaying at most three sub images on the left or right side of said main image displayed on said screen.

3. The image displaying apparatus according to claim 1 or 2, wherein said control means (5) changes the arrangement of said main and sub images on the right and left sides every time said input means (6,7) is operated.

4. The image displaying apparatus according to any one of the preceding claims, further comprising a three-wire bus (8) for transmitting data of said control timing from said control means (5) to said first and second storage means (2,4).

5. An image displaying apparatus according to any one of the preceeding claims, wherein
said screen comprises a cathode ray tube (CRT);
said first storage means comprises a time compression integrated circuit (2); and
said second storage means comprises an integrated circuit (4); and
further comprising switching means (9) for transmitting said main or sub image signal read out in response to the control timing data to said CRT.

## Patentansprüche

1. Bildanzeigevorrichtung mit:
a) einem Bildschirm (10), der ein Bild mit einem Breite-zu-Höhe-Seitenverhältnis von 16:9 darstellen kann;
b) einer ersten Speichereinrichtung (2) zum Speichern eines Hauptbildsignales mit einem Breite-zu-Höhe-Seitenverhältnis von 4:3;
c) einer zweiten Speichereinrichtung (4) zum Speichern von Nebenbildsignalen mit einem Breite-zu-Höhe-Seitenverhältnis von 4:3;
d) einer Einrichtung zum Anzeigen von Haupt- und Nebenbildern der aus der ersten und der zweiten Speichereinrichtung (2, 4) ausgelesenen Haupt- und Nebenbildsignalen auf dem Bildschirm;
e) einer Eingabeeinrichtung (6, 7) zum Eingeben einer ausgewählten Anordnung der Haupt- und Nebenbilder auf dem Bildschirm; und
f) einer Steuereinrichtung (5), die abhängig von einem Signal von der Eingabeeinrichtung (6, 7) einen Zeitablauf steuert, bei dem die Haupt- und Nebenbildsignale aus der ersten und der zweiten Speichereinrichtung (2, 4) ausgelesen werden, so daß das Nebenbild nach Wahl in einem Abschnitt auf der linken oder der rechten Seite des auf dem Bildschirm (10) dargestellten Hauptbildes dargestellt wird.

2. Bildanzeigevorrichtung gemäß Anspruch 1,
wobei die Anzeigeeinrichtung maximal drei Nebenbilder auf der linken oder der rechten Seite des auf dem Bildschirm dargestellten Hauptbildes darstellen kann.

3. Bildanzeigevorrichtung gemäß Anspruch 1 oder 2,
wobei die Steuereinrichtung (5) die Anordnung der Haupt- und Nebenbilder auf der linken und der rechten Seite jedesmal verändert, wenn die Eingabeeinrichtung (6, 7) bedient wird.

4. Bildanzeigevorrichtung gemäß einem der vorhergehenden Ansprüche,
außerdem aufweisend einen Bus (8) mit drei Leitungen zum Übergeben von Daten des Steuerzeitablaufes von der Steuereinrichtung (5) an die erste und die zweite Speichereinrichtung (2, 4).

5. Bildanzeigevorrichtung gemäß einem der vorhergehenden Ansprüche,
wobei der Bildschirm eine Kathodenstrahlröhre (CRT) aufweist, die erste Speichereinrichtung eine integrierte Schaltung (2) zur Zeitkompression aufweist, und die zweite Speichereinrichtung eine integrierte Schaltung (4) aufweist und weiterhin aufweisend eine Umschalteinrichtung (9) zum Übermitteln des abhängig von den Steuerzeitablaufdaten ausgelesenen Haupt- oder Nebenbildsignales an die CRT.

## Revendications

1. Appareil pour la reproduction d'images comprenant :
a) un écran (10) capable d'afficher une image avec un format d'image de largeur sur hauteur de 16:9 ;
b) des premiers moyens de stockage (2) destinés à stocker un signal d'image principale avec un format d'image de largeur sur hauteur de 4:3 ;
c) des seconds moyens de stockage (4) destinés à stocker les signaux de sous-images avec un format d'image de largeur sur hauteur de 4:3 ;
d) des moyens destinés à afficher sur ledit écran une image principale et des sous-images desdits signaux d'image principale et de sous-images extraits desdits premiers et seconds moyens de stockage (2, 4) ;
e) des moyens d'entrée (6, 2) destinés à entrer un agencement choisi de ladite image principale et desdites sous-images sur ledit écran ; et
f) des moyens de commande (5), sensibles à un signal provenant desdits moyens d'entrée (6, 7), destinés à commander un séquencement selon lequel lesdits signaux d'image principale et de sous-images sont extraits desdits premiers et seconds moyens de stockage (2, 4) afin que ladite sous-image soit affichée sur une partie du côté gauche ou droit de ladite image principale affichée sur ledit écran (10) comme choisi.

2. Appareil pour la reproduction d'images selon la revendication 1, dans lequel lesdits moyens d'affichage sont capables d'afficher au plus trois sous-images sur le côté gauche ou droit de ladite image principale affichée sur ledit écran.

3. Appareil pour la reproduction d'images selon la revendication 1 ou 2, dans lequel lesdits moyens de commande (5) modifient l'agencement de ladite image principale et desdites sous-images sur les côtés droit et gauche à chaque fois que lesdits moyens d'entrée (6, 7) sont actionnés.

4. Appareil pour la reproduction d'images selon l'une quelconque des revendications précédentes, comprenant de plus un bus à trois fils (8) pour transmettre les données dudit séquencement de commande, desdits moyens de commande (5) auxdits premiers et seconds moyens de stockage (2, 4).

5. Appareil pour la reproduction d'images selon l'une quelconque des revendications précédentes, dans lequel
ledit écran comprend un tube cathodique (CRT) ;
lesdits premiers moyens de stockage comprennent un circuit intégré de compression de temps (2) ; et lesdits seconds moyens de stockage comprennent un circuit intégré (4) ; et
comprenant, de plus, des moyens de commutation (9) pour transmettre ledit signal d'image principale ou de sous-images lu en réponse aux données de séquencement de commande vers ledit tube cathodique.
